# EUROPÄISCHE PATENTANMELDUNG

(11) **EP 1 544 485 A1**
(43) Veröffentlichungstag der Anmeldung: **22.06.2005**
(21) Anmeldenummer: 04027777.4
(22) Anmeldetag: 23.11.2004
(51) Int. Cl.: F16C 33/78

(54) **Lagerdichtung und Lager**

(30) Priorität: 18.12.2003 DE 20319659 U; 19.04.2004 DE 202004006136 U
(71) Anmelder: Liebherr-Werk Biberach GmbH, 88400 Biberach an der Riss (DE)
(72) Erfinder: Molhagen, Klaus Peter, 87700 Memmingen (DE)
(74) Vertreter: Laufhütte, Dieter, Dr.-Ing.

(57) **Zusammenfassung**

Die Erfindung betrifft eine Lagerdichtung, insbesondere Wellendichtung oder Achsdichtung, zum dichtenden Verschließen eines Zwischenraumes zweier sich um eine Rotationsachse (A) mit einer ersten bzw. einer zweiten Drehzahl drehender Elemente, wobei (201,203) zumindest eine der Drehzahlen ungleich 0 ist, mit
- einem rotationssymmetrischen Zwischenring (215), der mit einem Bewegungselement (202) zur Bewegung mit einer dritten Drehzahl um die Rotationsachse (A) in Wirkverbindung bringbar ist, wobei die dritte Drehzahl zwischen der ersten und der zweiten Drehzahl liegt, und
- zwei um die Rotationsachse (A) angeordneten, um die Rotationsachse rotationssymmetrischen Dichtungen (211,213), von denen eine sich mit dem einen Element um die Rotationsachse (A) bewegt und die andere sich mit dem anderen Element oder mit dem Zwischendichtring (215) um die Rotationsachse (A) bewegt,
wobei
der Zwischenring (215) derart ausgestaltet ist, daß er mit den Dichtungen (211,213) in Kontakt ist und diese voneinander trennt.

## Beschreibung

Die Erfindung betrifft eine Lagerdichtung, insbesondere eine Wellendichtung oder Achsdichtung, zum dichtenden Verschließen eines Zwischenraumes zweier sich um eine Rotationsachse mit einer ersten bzw. zweiten Drehzahl drehender Elemente, von denen zumindest eine Drehzahl ungleich null ist. Die Erfindung betrifft weiterhin ein Lager mit zumindest einer solchen Lagerdichtung.

Lagerdichtungen können z. B. Wellendichtungen oder Achsdichtungen sein. Sie finden z. B. bei Fahrantrieben für Bagger, Planierraupen oder Achsen für Radlager Verwendung, die im Betrieb einer starken äußeren Belastung durch Schmutz unterliegen. Außerdem werden derartige Lagerdichtungen zur Verhinderung des Austrittes von Schmierstoffen verwendet. Dabei muß der Spalt zwischen einem in der Regel stehenden Gehäuseteil und einem sich drehenden Element abgedichtet werden. Auf die Dichtung werden also bei der Relativdrehung der beiden Teile große mechanische Kräfte in Umfangsrichtung ausgeübt.

Es gibt zwei Hauptbauarten von Lagerdichtungen, die in den verschiedensten Ausführungen überwiegend Verwendung finden, die am Beispiel eines Antriebes mit einem stehenden und einem sich relativ dazu drehenden Teil beschrieben werden.

Zum einen werden Dichtungen aus Elastomerstoffen verwendet, die auf der einen Seite fest mit dem feststehenden Gehäuse verbunden sind und auf der anderen Seite ein oder mehrere elastisch nachgeführte Dichtkanten besitzen. In dieser Bauart sind am häufigsten sogenannte Wellendichtringe in Verwendung.

Zum anderen werden Gleitringdichtungen eingesetzt, bei denen die Dichtheit dadurch erreicht wird, daß zwei Gleitringe aus festen Werkstoffen aneinander gedrückt werden und der äußerst geringe Spalt zwischen dem stehenden und dem drehenden Gleitring den Schmierstoffaustritt und den Schmutzeintritt verhindert. Stand der Technik ist, daß die Gleitringdichtung aus zwei Stahlringen besteht, die wiederum durch zwei O-Ringe geführt und aufeinander gedrückt werden. Die Stahlringe sind in ihrer Form, dem Werkstoff und der Wärmebehandlung so beschaffen, daß sich an den Gleitflächen eine dauerhafte Dichtheit ergibt. Verschleiß der Dichtung durch aggressive Medien und Korrosion wird durch fortlaufende Erneuerung der Gleitflächen in Form von Abtrag ausgeglichen.

Die Lagerdichtungen sind in der Regel zwischen dem stehenden Teil und dem drehenden Teil bzw. zwischen den sich mit unterschiedlichen Drehzahlen drehenden Teilen angeordnet. Die an den Dichtkanten auftretende Gleitgeschwindigkeit ergibt sich damit unmittelbar aus der Differenz der Drehzahl der zwei Antriebsteile.

Mit zunehmender Drehzahl und zunehmender Größe der Antriebe erreichen die bekannten Lagerdichtungen die technisch machbare Grenze.

Es ist die Aufgabe der Erfindung, eine Lagerdichtung, insbesondere eine Wellendichtung oder Achsdichtung, und ein Lager anzugeben, die einen größeren Drehzahlunterschied ermöglichen bzw. in größeren Antrieben einsetzbar sind.

Diese Aufgabe wird mit einer Lagerdichtung mit den Merkmalen des Anspruches 1 oder einem Lager mit den Merkmalen des Anspruches 6 gelöst.

Die erfindungsgemäße Lagerdichtung weist zwei um die Rotationsachse, um die sich die drehenden Elemente drehen, angeordnete rotationssymmetrische Dichtringe auf. Der Begriff "Rotationsachse" wird hier auch für die entsprechende Rotationssymmetrieachse verwendet. Eines dieser Elemente bewegt sich mit einer ersten Drehzahl und das andere mit einer zweiten, von der ersten unterschiedlichen Drehzahl um die Rotationsachse. Selbstverständlich ist auch eine Ausführungsform umfaßt, bei der eine der Drehzahlen null ist und das entsprechende Element dementsprechend feststeht, wobei sich das andere Element relativ zu dem feststehenden Element dreht. Sowohl bei Drehung beider Elemente mit unterschiedlicher Drehzahl, als auch bei Drehung nur eines Elementes entsteht eine Relativdrehung der beiden Elemente zueinander.

Erfindungsgemäß ist ein rotationssymmetrischer Zwischenring vorgesehen, der mit einem Bewegungselement in Wirkverbindung steht, das eine Drehung des Zwischenringes mit einer dritten Drehzahl um die Rotationsachse bewirkt, die zwischen der ersten und der zweiten Drehzahl liegt. Weiterhin sind zwei um die Rotationsachse angeordnete, um die Rotationsachse rotationssymmetrische Dichtungen, vorzugsweise aus Elastomerstoff vorgesehen, von denen eine sich mit dem einen Element um die Rotationsachse bewegt und die andere sich mit dem anderen Element oder mit dem Zwischenring um die Rotationsachse bewegt. Der Zwischenring ist dabei derart ausgestaltet, daß er jeweils mit den Dichtringen in Kontakt steht und diese voneinander trennt.

Der Zwischenring läuft also mit einer Drehzahl um die Rotationsachse, die zwischen den Drehzahlen der beiden sich relativ zueinander drehenden Elemente liegt. Bei einer Alternative läuft eine Dichtung mit der Geschwindigkeit des einen der zwei sich relativ zueinander bewegenden Elemente und die andere Dichtung mit der Geschwindigkeit des anderen Elementes. An den jeweiligen Kontaktflächen der Dichtungen mit dem Zwischenring gleiten die Dichtringe und der Zwischenring mit einer Relativgeschwindigkeit, die sich aus dem Betrag der Differenz der dritten Drehzahl und der ersten bzw. zweiten Drehzahl ergibt. Bei einer anderen Alternative bewegt sich eine der Dichtungen ebenfalls mit der Geschwindigkeit des ersten der zwei sich relativ zueinander bewegenden Elemente. Die Relativgeschwindigkeit zwischen dieser Dichtung und dem Zwischenring ergibt sich aus dem Betrag der Differenz zwischen der dritten Drehzahl, mit der sich der Zwischenring dreht, und der ersten Drehzahl, mit der sich das erste Element dreht. Die andere Dichtung bewegt sich bei dieser Alternative zusammen mit dem Zwischenring. Die Relativgeschwindigkeit zwischen dieser Dichtung und dem zweiten Element, das sich mit der zweiten Drehzahl dreht, ergibt sich aus dem Betrag der Differenz der zweiten Drehzahl und der dritten Drehzahl, mit der sich der Zwischenring bewegt.

Die Relativgeschwindigkeiten der einzelnen Elemente zueinander und somit die Geschwindigkeiten, mit denen einzelne Flächen aneinander gleiten, werden dadurch deutlich reduziert. Dadurch wird der Abrieb und die Wärmeentwicklung verringert.

Bei einer besonders bevorzugten Ausführungsform steht der Zwischenring mit einem Bewegungselement in Wirkverbindung, das sich mit einer Drehzahl bewegt, die dem Mittelwert zwischen der ersten und zweiten Drehzahl entspricht. Auf diese Weise wird die Relativgeschwindigkeit zwischen den einzelnen sich gegeneinander drehenden Flächen für jede Grenzfläche gleichviel erniedrigt und ist somit optimiert.

Zum Beispiel kann bei einer Ausführungsform, bei der ein Element feststeht und ein zweites Element sich relativ dazu bewegt, der Zwischenring mit einem Bewegungselement verbunden sein, das sich mit der halben Drehzahl des sich bewegenden Elementes bewegt.

Der Zwischenring kann auf verschiedene Weise mit einer Drehzahl angetrieben werden, die zwischen der ersten und zweiten Drehzahl liegt. Eine konstruktiv besonders einfache und günstige Anordnung sieht vor, daß der Zwischenring mit einem Wälzlager in Wirkverbindung steht, das die zwei sich relativ zueinander drehenden Elemente gegeneinander lagert. Bei diesem Wälzlager kann es sich um ein an sich bekanntes Wälzlager, z. B. ein Kugellager, ein Zylinderrollenlager, ein Kegelrollenlager o.ä. handeln. Die einzelnen Elemente eines solchen Wälzlagers bewegen sich mit einer Drehzahl um die Rotationsachse, die dem Mittelwert der Drehzahlen der zwei sich um die Rotationsachse relativ zueinander drehenden Elemente entspricht. Insbesondere hat ein Wälzlager, das ein sich drehendes Element gegen ein feststehendes Element lagert, die Eigenschaft, daß es sich mit der halben Drehzahl des sich drehenden Elementes um die Rotationsachse bewegt. Eine Wirkverbindung der Zwischenringdichtung mit dem Wälzlager bietet also auf einfache Weise die Möglichkeit der Bewegung der Zwischenringdichtung mit der mittleren Drehzahl. Ein solches Wälzlager ist in den meisten Fällen in der unmittelbaren Nachbarschaft des abzudichtenden Zwischenraumes zwischen den zwei sich relativ zueinander drehenden Elementen vorhanden und kann für die erfindungsgemäße Lagerdichtung ohne großen konstruktiven Aufwand eingesetzt werden.

Besonders vorteilhaft ist es, wenn der Zwischenring mit dem Wälzkörperkäfig des Wälzlagers in Verbindung steht. Der Zwischenring kann direkt mit dem Wälzkörperkäfig verbunden sein, z. B. verschraubt oder vernietet. Besonders vorteilhaft und schonend im Betrieb ist es, wenn der Zwischenring mit dem Wälzlagerkäfig über einen Mitnehmer angetrieben wird. Die Verbindung zwischen Zwischenring und Wälzkörperkäfig ist auf einfache Weise z. B. durch einen Mitnehmer möglich.

Ein erfindungsgemäßes Lager weist zwei sich um eine Rotationsachse mit einer ersten bzw. zweiten Drehzahl drehende Elemente auf, wobei zumindest eine Drehzahl ungleich null ist. Weiterhin ist ein Bewegungselement vorgesehen, das sich mit einer Drehzahl um die Rotationsachse bewegt, die zwischen der ersten und der zweiten Drehzahl liegt. Das erfindungsgemäße Lager weist eine erfindungsgemäße Lagerdichtung zum Verschluß des Zwischenraumes der zwei sich relativ zueinander drehenden Elemente auf. Die Vorteile des erfindungsgemäßen Lagers ergeben sich in analoger Weise wie oben bereits für die erfindungsgemäße Lagerdichtung beschrieben.

Eine besondere Ausführungsform des erfindungsgemäßen Lagers weist ein Wälzlager als Bewegungselement auf. Bei einer Weiterbildung steht der Zwischenring der erfindungsgemäßen Lagerdichtung mit dem Wälzkörperkäfig des Wälzlagers in Wirkverbindung.

Die Erfindung wird anhand der anliegenden Figuren im Detail erläutert, die Ausführungsformen der Erfindung zeigen. Dabei zeigt:
- Figur 1:: einen Teillängsschnitt durch eine erfindungsgemäße Lagerdichtung, und
- Figur 2:: in schematischer Darstellung einen Teillängsschnitt durch einen Antrieb zur Erläuterung der Einbausituation von Lagerdichtungen.

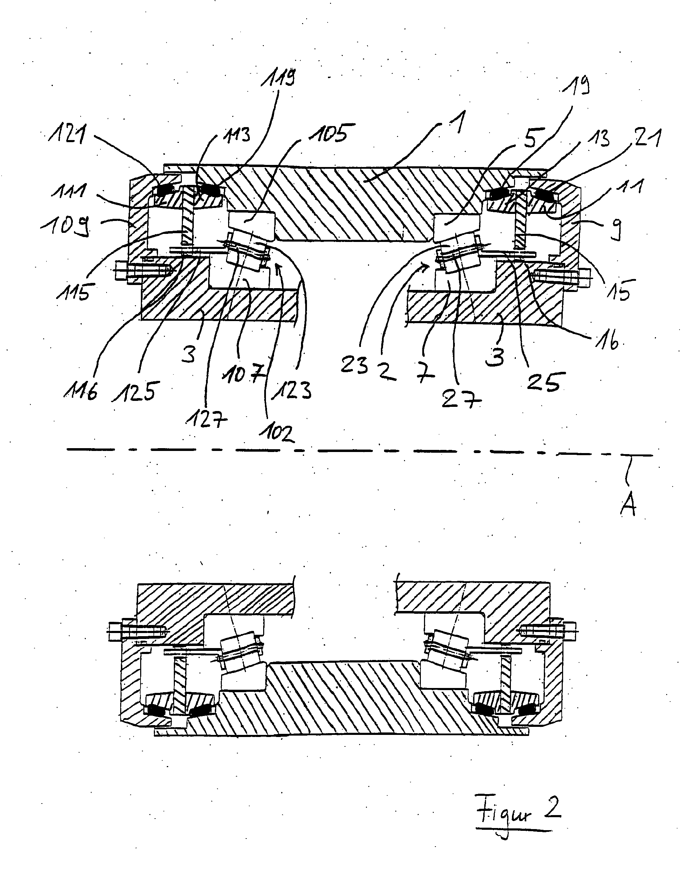

Zunächst wird anhand der Figur 2 die Einbausituation einer Lagerdichtung mit einem Zwischendichtring allgemein erläutert.

Auf dem feststehenden Teil 3 des Antriebes, den Figur 2 nur als Ausschnitt zeigt, befinden sich zwei Wälzlager 2, 102. Diese bestehen jeweils aus einem Innenring 7, 107, dem drehenden Außenring 5, 105, den Wälzkörpern 23, 123 und dem Wälzkörperkäfig 27,127. In dem mit den Außenringen 5, 105 umlaufenden Antriebsteil 1 befinden sich die über die jeweiligen O-Ringe 19, 119 gehaltenen umlaufenden Gleitringe 13, 113. In den mit dem feststehenden Teil 3 des Antriebes verbundenen Verschlußringen 9, 109 befinden sich die zweiten über die jeweiligen O-Ringen 21, 121 gehaltenen Gleitringe 11, 111. Zwischen den Gleitringen 11 und 13 einerseits und den Gleitringen 111 und 113 andererseits befinden sich jeweils Zwischengleitringe 15 bzw. 115, die über jeweilige Mitnehmer 25, 125 mit den jeweiligen Wälzkörperkäfigen in Wirkverbindung stehen. Dazu sind zum Eingriff der Mitnehmer 25, 125 in den Zwischengleitringen 15, 115 z. B. Bohrungen 16, 116 vorgesehen. Die Antriebsteile 1, 3, die Außenringe 5, 105, die Innenringe 7, 107, die Verschlußstücke 9, 109, die Gleitringe 11, 13, 111, 113, die Zwischengleitringe 15, 115, die O-Ringe 19, 21, 119, 121 sind um die Rotationsachse A rotationssymmetrisch. Die O-Ringe 19, 21, 119, 121 sind herkömmliche O-Ringe, z. B. aus Elastomerstoffen. Die Gleitringe 11, 13, 111, 113 sind z. B. aus Stahl gefertigt.

Bei dem gezeigten Lager bewegt sich z. B. das Element 1 um die Rotationsachse A. Sein Antrieb kann z. B. in an sich bekannter Weise von einer nicht gezeigten Welle in der Rotationsachse A über ein ebenfalls nicht dargestelltes Planetengetriebe erfolgen. Mit dem sich drehenden Element 1 ist z. B. die Kette eines Kettenfahrzeuges oder ein Rad o.ä. verbunden.

Im Betrieb dreht sich das drehende Element 1 um die Rotationsachse A. Dabei wälzt es sich über die Wälzkörper 23, 123 der Wälzlager 2, 102 in an sich bekannter Weise gegen das feststehende Teil 3 ab. Die Wälzkörperkäfige 27, 127 bewegen sich dabei mit der halben Drehzahl des Elementes 1. Mit den Wälzkörperkäfigen 27, 127 sind Mitnehmer 25, 125 verbunden. Diese greifen an die Zwischengleitringe 15, 115 an und bewegen diese ebenfalls mit der halben Drehzahl um die Rotationsachse A. Die Relativgeschwindigkeit des Zwischengleitrings 15, 115 gegenüber dem Gleitring 13, 113 entspricht also der halben Drehzahl des Elementes 1. Ebenso entspricht die Relativgeschwindigkeit zwischen dem Zwischengleitring 15, 115 und dem Gleitring 11, 111 der halben Drehzahl des Elementes 1. Die Relativgeschwindigkeit der einzelnen aneinander gleitenden Flächen ist also halbiert und der Abrieb und die Wärmeentwicklung verringert.

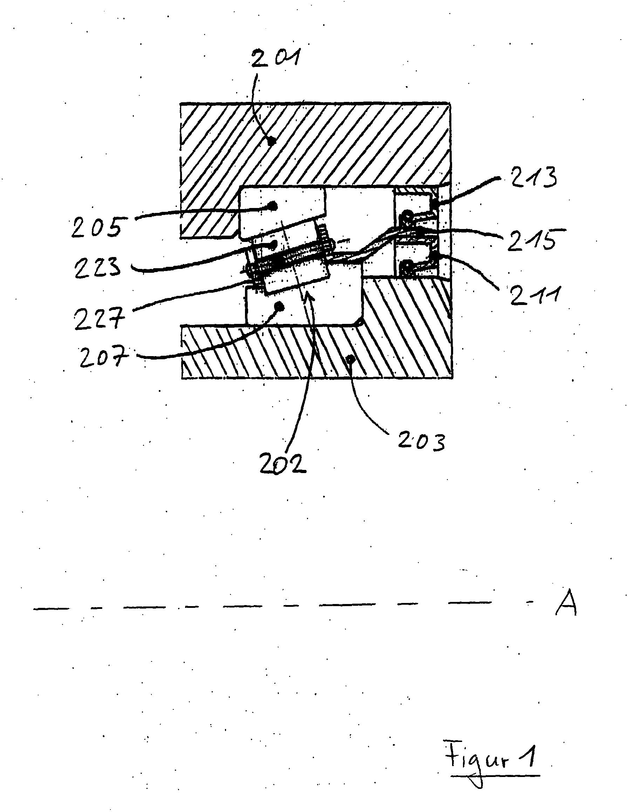

Figur 1 zeigt eine erfindungsgemäße Ausführungsform, wobei hier nur ein Ausschnitt gezeigt ist, der etwa dem im rechten oberen Teil der Figur 1 gezeigten Ausschnitt entspricht. Die Rotationssymmetrieachse z. B. für die Elemente 201, 203, 211, 213 entspricht der Rotationsachse A.

Der sich um eine Rotationsachse A drehende Teil 201 bewegt sich um das feststehende Teil 203. Dabei wälzt er sich über die Wälzkörper 223 des Wälzlagers 202 ab. 205 bezeichnet den Außenring und 207 den Innenring des Wälzlagers 202. 227 bezeichnet das Wälzkörperlager des Wälzkörpers 202. Mit dem Wälzkörperkäfig 227 ist ein Zwischenring 215 verbunden.

Bei der in Figur 1 gezeigten Ausführungsform ist der Zwischenring 215 mit einer ersten Elastomerdichtung 211 verbunden. Ein zweiter Elastomerring 213 ist fest mit dem drehenden Teil 201 verbunden. Bei der gezeigten Ausführungsform bewegt sich der radiusmäßig innere Teil der Elastomerdichtung 211 gegenüber dem stehenden Teil 203 mit der Geschwindigkeit des Zwischenringes 215. Andererseits bewegt sich der radiusmäßig innere Teil der Elastomerdichtung 213 mit der Relativgeschwindigkeit zwischen dem rotierenden Teil 201 und dem mit der halben Drehzahl rotierenden Zwischenring 215. Die jeweils radiusmäßig inneren Teile der Elastomerringe 211, 213 können Halteringe zur Aufrechterhaltung ihrer Form aufweisen, die in Figur 1 ebenfalls im Schnitt erkennbar sind.

Beim Betrieb der Ausführungsform der Figur 1 bewegt sich das drehende Teil 201 um eine Rotationsachse A. Der Wälzkörperkäfig bewegt sich mit der halben Drehzahl des Elementes 201 ebenfalls um diese Rotationsachse A. Auf diese Weise bewegen sich auch der Zwischenring 215 und die Elastomerdichtung 211 mit der halben Drehzahl. Die Relativgeschwindigkeit zwischen der Elastomerdichtung 211 und dem stehenden Teil 203 beträgt also die Hälfte der Relativgeschwindigkeit zwischen dem stehenden Teil 203 und dem rotierenden Teil 201. Die Relativgeschwindigkeit zwischen der Elastomerdichtung 213 und dem Zwischenring 215 beträgt ebenfalls die Hälfte der Relativgeschwindigkeit zwischen dem rotierenden Teil 201 und dem stehenden Teil 203.

Bei einer anderen Ausführungsform sind die Elastomerdichtungen jeweils mit dem rotierenden Teil 201 bzw. mit dem stehenden Teil 203 verbunden. Bei einer solchen Ausführungsform bewegt sich der Zwischenring 215 ebenfalls mit der halben Drehzahl. Die Elastomerdichtungen, die bei dieser Ausführungsform fest mit den sich gegeneinander drehenden Elementen verbunden sind, bewegen sich mit diesen Elementen. Die Relativgeschwindigkeit zwischen den Elastomerdichtungen und dem Zwischenring beträgt also jeweils die Hälfte der Relativgeschwindigkeit zwischen den sich gegeneinander bewegenden Elementen.

Aufgrund der halbierten Relativgeschwindigkeiten der einzelnen Elemente zueinander ist bei den Ausführungsformen der Abrieb und die Wärmeentwicklung verringert.

Die erfindungsgemäße Lagerdichtung ist nicht auf die Anwendung in Antrieben beschränkt. Sie kann eingesetzt werden, wo zwei Elemente sich relativ zueinander drehen und der Zwischenraum zwischen ihnen trotzdem dichtend verschlossen sein soll. Insbesondere ist die erfindungsgemäße Lagerdichtung nicht auf Ausführungen beschränkt, bei denen sich ein äußeres Element 201 um ein inneres Element 203 bewegt, wie es bei den beschriebenen Ausführungsbeispielen der Fall ist. Möglich ist es auch, daß sich das innere Element in dem äußeren Element dreht oder daß beide Elemente sich in gleicher Drehrichtung mit unterschiedlicher Geschwindigkeit oder gegeneinander drehen. Bei einer Ausführung, bei der sich die Elemente gegeneinander drehen, wird entweder die erste oder die zweite Drehzahl mit negativem Vorzeichen angenommen.

Besonders vorteilhaft ist die erfindungsgemäße Lagerdichtung einsetzbar, wenn sich in unmittelbarer Nachbarschaft ein Wälzlager befindet, von dessen Wälzkörperlager die mittlere Drehzahl abgegriffen werden kann.

## Patentansprüche

1. Lagerdichtung, insbesondere Wellendichtung oder Achsdichtung, zum dichtenden Verschließen eines Zwischenraumes zweier sich um eine Rotationsachse (A) mit einer ersten bzw. einer zweiten Drehzahl drehender Elemente (201, 203), wobei zumindest eine der Drehzahlen ungleich 0 ist, mit
- einem rotationssymmetrischen Zwischenring (215), der mit einem Bewegungselement (202) zur Bewegung mit einer dritten Drehzahl um die Rotationsachse (A) in Wirkverbindung bringbar ist, wobei die dritte Drehzahl zwischen der ersten und der zweiten Drehzahl liegt, und
- zwei um die Rotationsachse (A) angeordneten, um die Rotationsachse rotationssymmetrischen Dichtungen (211, 213), von denen eine sich mit dem einen Element um die Rotationsachse (A) bewegt und die andere sich mit dem anderen Element oder mit dem Zwischendichtring (215) um die Rotationsachse (A) bewegt, wobei
der Zwischenring (215) derart ausgestaltet ist, daß er mit den Dichtungen (211, 213) in Kontakt ist und diese voneinander trennt.

2. Lagerdichtung nach Anspruch 1, bei der die Dichtungen (211, 213) aus Elastomerstoff sind.

3. Lagerdichtung nach einem der Ansprüche 1 oder 2, bei der der Zwischenring (215) mit einem Bewegungselement (202) in Wirkverbindung steht, das sich mit einer dritten Drehzahl um die Rotationsachse bewegt, die dem Mittelwert aus der ersten und zweiten Drehzahl entspricht.

4. Lagerdichtung nach Anspruch 3, bei der der Zwischenring (215) mit einem Wälzlager (202) als Bewegungselement in Wirkverbindung steht, das die zwei drehenden Elemente (201, 203) gegeneinander drehbar lagert, vorzugsweise mit dem Wälzkörperkäfig (227) des Wälzlagers (202).

5. Lagerdichtung nach Anspruch 4, bei der der Zwischenring über einen Mitnehmer von dem Wälzlagerkäfig angetrieben wird.

6. Lager mit
- zwei sich um eine Rotationsachse (A) mit einer ersten bzw. einer zweiten Drehzahl drehenden Elementen (201, 203), wobei zumindest eine der Drehzahlen ungleich null ist,
- zumindest einer Lagerdichtung gemäß einem der Ansprüche 1 bis 5, und
- einem Bewegungselement (202), das sich mit einer dritten Drehzahl um die Rotationsachse (A) bewegt, die zwischen der ersten und der zweiten Drehzahl liegt, wobei der Zwischenring (215) der zumindest einen Lagerdichtung mit dem Bewegungselement (202) in Wirkverbindung steht.

7. Lager nach Anspruch 6, bei dem das Bewegungselement ein Wälzlager (202) umfaßt.

8. Lager nach Anspruch 7, bei dem der Zwischenring (115) mit dem Wälzkörperkäfig (227) des Wälzlagers (202) in Wirkverbindung steht.
